# EUROPEAN PATENT APPLICATION

(11) **EP 4 295 685 A1**
(43) Date of publication of application: **27.12.2023**
(21) Application number: 22180435.4
(22) Date of filing: 22.06.2022
(51) Int. Cl.: A01N 43/707, A01N 47/12, A01P 13/02, A01N 43/80, A01N 43/82, A01N 47/30, A01N 33/18, A01N 39/02, A01N 43/40, A01N 43/78, A01N 43/90

(54) **METHOD OF APPLICATION OF HERBICIDAL ACTIVE INGREDIENTS IN DIFFERENT STAGES**

(71) Applicant: Adama Agan Ltd., 7710001 Ashdod (IL)
(72) Inventor: BECUE, Anne-Sophie, 02370 Vailly-sur-Aisne (FR); KERGOAT, Pierre-Yves, 75010 Paris (FR)
(74) Representative: Modiano, Gabriella Diana

(57) **Abstract**

A method for controlling weeds, which comprises the application of an effective amount of a herbicide composition comprising at least metamitron in an earlier stage, to a locus where the weed is to be controlled, and the application of an effective amount of at least one additional herbicide in a late stage.

## Description

### FIELD OF THE INVENTION

The present invention belongs to the field of agrochemistry. It is directed to a method of application of herbicidal active ingredients for controlling weeds.

### BACKGROUND

The vulnerability of crops to weeds makes crop protection management one of the major components of the total crop production system. Various insects and fungi along with the undesired weeds are very harmful to crop plants and can significantly reduce crop yields and qualities. Herbicides alone or in combination help minimize this damage by controlling threats to the crop. Many active ingredients either of the same class or having mixtures of different classes are commercially available for these purposes.

Combinations of herbicides or mixtures of one or more herbicides with other active ingredients are typically used to broaden spectrum of control, to minimize the doses of chemicals used, to retard the development of resistance and to reduce the cost of the treatment through additive effect. Although many combinations of one herbicide agent with one or more active ingredients have been studied, a synergistic effect is rarely attained.

Practical agricultural experience has shown that the repeated and exclusive application of an individual active ingredient in the control of a single weed leads in many cases to a selection of those weeds which have developed natural or adapted resistance against the active compound in question. Effective control of these weeds with the active compound in question is then no longer possible. Therefore, there is a need for active ingredients that help prevent or overcome resistance.

Active agent combinations are described in the literature. However, the control over the weeds does not always satisfy the needs of agriculture practice. Additionally, the control provided by these combinations is not always satisfactory, or it can create additional toxicological and/or environmental effects. Therefore, there is a need for the development of new methods of application of pesticidal combinations that reduce the amounts of applied pesticides and/or improve the weed control.

### SUMMARY OF THE INVENTION

It is an endeavor of the present invention to find methods of application of herbicidal active ingredients that improve the weed control and/or reduce the dosage rate of applied herbicidal active ingredients. These improvements may come in the form of a sequential application of herbicidal active ingredients, pre-emergence and post-emergence.

A first aspect of the invention is a method for controlling weeds, which comprises the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide in a stage from 09 to 15, according to the BBCH scale for cereals, rice or maize, with the proviso that the herbicide composition comprising at least metamitron is applied in a lower stage in the BBCH scale than the additional herbicide is applied.

### DETAILED DESCRIPTION OF THE INVENTION

### Definitions

Embodiments of the present invention are discussed in detail below. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the spirit and scope of the invention. While a number of embodiments and features are described herein, it is to be understood that the various features of the invention and aspects of embodiments, even if described separately, may be combined unless mutually exclusive or contrary to the specific description. All references cited herein are incorporated by reference as if each had been individually incorporated.

As used herein, the transitional term "comprising" or "that comprises", which is synonymous with "including," or "containing," is inclusive or open-ended and does not exclude additional, un-recited elements or method steps. However, in each recitation of "comprising" herein, it is intended that the term also encompass, as alternative embodiments, the phrases "consisting essentially of" and "consisting of", where "consisting of" excludes any element or step not specified and "consisting essentially of" permits the inclusion of additional un-recited elements or steps that do not materially affect the essential or basic and novel characteristics of the composition or method under consideration.

Prior to setting forth the present subject matter in detail, it may be helpful to provide definitions of certain terms to be used herein. Unless defined otherwise, all technical and scientific terms used herein have the same meaning as is commonly understood by one of skill in the art to which this subject matter pertains.

As used herein, the term "effective amount" when used in connection with an active ingredient, refers to an amount of thereof that, when ingested, contacted with or sensed, is sufficient to achieve a good level of control of a weed.

As used herein, the term "effective amount" when used in connection with a non-active component, i.e. adjuvant, refers to an amount of the additive that is sufficient to perform its function within the formulation.

In this document, the "BBCH scale" means the codation of phenological growth stages for mono- and dicotyledonous plants, and particularly herein referred to cereals, rice or maize, published by the Julius Kühn-Institut and the Bundesforschungsinstitut für Kulturplanzen in Quedlingburg, Germany in its edition of 2018.

An "active ingredient" is a substance capable of controlling undesired plants (weeds), and does not cause significant damage to the treated crop plants. The term "active ingredient" comprises, but is not limited to insecticides, nematicides, herbicides, fungicides, algicides, animal repellents or acaricides. Active ingredients are not limited to pesticides, and also include for example hormones, bio-stimulants, and plant growth regulators.

As used herein, the term "herbicide" refers to an active ingredient capable of controlling unwanted plants or weeds, for example when growing in the locus of the desired crop.

As used herein, the term "agriculturally acceptable carrier" means a carrier which is known and accepted in the art for the formation of compositions for agricultural or horticultural use.

As used herein the term "plant" or "crop" or "crop plants" includes reference to whole plants, plant organs (e.g. leaves, stems, twigs, roots, trunks, limbs, shoots, fruits etc.), plant cells, or plant seeds, which have industrial interest, including grasslands and pastures, such as for example plants destined to human consumption, animal consumption or other industrial uses. This term also encompasses crops such as fruits. The term "plant" may also include the propagation material thereof, which may include all the generative parts of the plant such as seeds and vegetative plant material such as cuttings and tubers, which can be used for the multiplication of the plant. It may also include spores, corms, bulbs, rhizomes, sprouts basal shoots, stolons, and buds and other parts of plants, including seedlings and young plants, which are to be transplanted after germination or after emergence from soil. As used herein, the term "crop" includes plants which have been modified by breeding, mutagenesis or genetic engineering. Genetically modified plants are plants in which their genetic material has been modified by the use of recombinant DNA techniques. Typically, one or more genes have been integrated into the genetic material of such a plant in order to improve certain properties of the plant.

As used herein, the term "locus" includes a habitat, breeding ground, plant, seed adapted to produce a plant, propagation material, soil, area adjacent to a plant, field, material or environment in which a weed is growing or may grow.

As used herein, the terms "control" or "controlling" or "combatting" refers to preventing the growth of weeds, delaying the onset of weeds, and to killing or to reducing growth of weeds.

As used herein, the term "agriculturally acceptable inert additives" is defined as any substance that itself is not an active ingredient but is added to the formulation to improve its properties, such as stability, flowability, density, etc. Some substances can be used as agriculturally acceptable inert additives in the herbicidal composition of the invention or mixed as tank additives with the herbicidal composition of the invention prior to application in the field. Nonlimiting examples of agriculturally acceptable inert additives and of tank additives are chelating agents, thickeners, anti-foam agents, pH buffers, antifreeze agents, surfactants, emulsifiers, wetting agents or humectants, suspending agents, stabilizers, anti-oxidation agents, preservative agents, inverting agents, UV absorbers, binders, pigments, colorants or solvents.

As used herein, the term "adjuvant" is broadly defined as any substance that itself is not an active ingredient, but which enhances or is intended to enhance the effectiveness of the herbicide with which it is used. Adjuvants may be understood to include, but are not limited to, safeners, spreading agents, plant penetrants (or translocators), compatibility agents, drift retardants, soil penetrants, stickers, fertilizers. They are typically used to dilute ready mix formulations prior to application in the field, although some formulations include built-in adjuvants.

As used herein, the term "ready mix" means a formulation that may be applied to plants directly after dilution. The formulation comprises one or more active ingredients. The term "mixture" refers, but is not limited to, a combination in any physical form, e.g., blend, solution, alloy, or the like.

As used herein, the term "tank mix" refers to the mixture of two or more active ingredients or compositions that are mixed shortly before application. Tank mixtures can therefore be formed by mixing one or more compositions (each comprising one or more active ingredients) with water and/or with one or more adjuvants, or they can be formed by mixing the active ingredients *in situ* with water and/or with one or more adjuvants.

The term "a" or "an" as used herein includes the singular and the plural, unless specifically stated otherwise. Therefore, the terms "a," "an" or "at least one" can be used interchangeably in this application.

As used herein the term "ha" refers to hectare.

As used herein, the term "g" refers to gram, and "L" or "I" refers to litre.

As used herein, the term "more effective" includes, but is not limited to, increasing efficacy of the herbicidal control, prolonging protection and reducing the amount of time needed to achieve a given level of herbicidal control, prolonging the duration of protection against weeds attack after application and extending the protection period against weeds attack and/or reducing the amount of time needed to achieve a level of weeds control compared to when each pesticide at the same amount is applied alone.

The term "enhancing crop plants" as used herein means improving one or more of plant quality, plant vigor, nutrient uptake, root system, tolerance to stress factors, and/or yield in a plant to which the mixture or formulation described herein has been applied as compared to a control plant grown under the same conditions without the mixture or formulation described herein.

The term "enhancing the root system" as used herein means that the root system is improved qualitatively or quantitatively in a plant to which the mixture or formulation described herein has been applied as compared to the root systems in a control plant grown under the same conditions without the mixture or formulation described herein. Enhanced root systems include but are not limited to improved visual appearance and composition of the root system (i.e., improved color, density, and uniformity), increased root growth, a more developed root system, stronger and healthier roots, improved plant stand, and increased root system weight.

The term "improving plant quality" as used herein means that one or more traits are improved qualitatively or quantitatively in a plant to which the mixture or formulation described herein has been applied as compared to the same trait in a control plant grown under the same conditions without the mixture or formulation described herein. Such traits include but are not limited to improved visual appearance and composition of the plant (i.e., improved color, density, uniformity, compactness), reduced ethylene (reduced production and/or inhibition of reception), improved visual appearance and composition of harvested material (i.e., seeds, fruits, leaves, vegetables, shoot/stem/cane), improved carbohydrate content (i.e., increased quantities of sugar and/or starch, improved sugar acid ratio, reduction of reducing sugars, increased rate of development of sugar), improved protein content, improved oil content and composition, improved nutritional value, reduction in anti-nutritional compounds, increased nutrient uptake, stronger and healthier roots, improved organoleptic properties (i.e., improved taste), improved consumer health benefits (i.e., increased levels of vitamins and antioxidants), improved post-harvest characteristics (i.e., enhanced shelf-life and/or storage stability, easier processability, easier extraction of compounds), and/or improved seed quality (i.e., for use in following seasons).

For purposes of better understanding the present teachings and in no way limiting the scope of the teachings, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that may vary depending upon the desired properties sought to be obtained. At the very least, each numerical parameter should at least be construed in light of the number of reported significant digits and by applying ordinary rounding techniques. In this regard, used of the term "about" herein specifically includes ±10% from the indicated values in the range. In addition, the endpoints of all ranges directed to the same component or property herein are inclusive of the endpoints, are independently combinable, and include all intermediate points and ranges. Similarly, the ranges and amounts for each element of the technology described herein can be used together with ranges or amounts for any of the other elements.

Unless otherwise specified, references to percentages of a component present in a combination are by weight (wt.) percentages of the component with respect to the total weight of the combination.

It is further understood that where a parameter range is provided, all integers within that range, and tenths thereof, are also provided by the subject matter. For example, "0.1% to 50%" includes 0.1 %, 0.2 %, 0.3 %, 0.4 % etc. up to 50 %.

When a ratio herein is to be "X:1 or higher", it is meant that the ratio is Y:1, where Y is X or greater, and when a ratio is herein to be "X:1 or lower", it is meant that the ratio is Z:1, where Z is X or less. The same logic follows for ratios that are "1:X or higher" and "1:X or lower".

### Methods and Applications

It has been surprisingly found that a method for controlling weeds, which comprises the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide in a stage from 09 to 15, according to the BBCH scale for cereals, rice or maize, with the proviso that the herbicide composition comprising at least metamitron is applied in a lower stage in the BBCH scale than the additional herbicide is applied, exhibits a broad spectrum of control and high efficacy against a very wide range of weeds, as well as having knock-down and long residual effect under different climate conditions.

The method of application described herein provides a higher herbicidal activity than when the herbicidal active ingredients of the method are applied either all of them at the pre-emergence stage or all of them at the post-emergence stage. The method of this invention allows reduced dosages of the individual herbicides which can damage agriculturally important plants.

The present disclosure relates to a method for controlling weeds, which comprises the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide in a stage from 09 to 15, according to the BBCH scale for cereals, rice or maize, with the proviso that the herbicide composition comprising at least metamitron is applied in a lower stage in the BBCH scale than the additional herbicide is applied.

The plant in the method of the invention may be a cereal plant. The cereal plant may be wheat, in anyone of its varieties like for example common wheat, spelt, durum, einkorn, emmer, Khorasan, red fife or club wheat; barley, maize, rice, oat, millet, rye, triticale, sorghum, fonio, teff or adlay.

The weed in the method of the present disclosure may be selected from the group consisting of Alopecurus myosuroides Huds. (blackgrass, ALOMY), Apera spica venti (APESV), Poa annua (POAAN), Lolium species (LOLSS), Lolium multiflorum Lam. (Italian ryegrass, LOLMU) or Lolium perenne (English ryegrass, LOLPE).

The additional herbicides of the method of the present invention may be applied to the same or different parts of the locus, i.e. to the same or different parts of the plant, soil, area adjacent to the plant, propagation material, root, foliage and/or seed that the herbicide composition comprising at least metamitron. These additional herbicides may be applied together as a tank mix, or as a ready mix, or separately in a simultaneous or sequential way.

The method for controlling weeds, which comprises the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines, phenyl ether inhibitors of PDS, urea inhibitors of photosynthesis at PS II or cinmethylin in a stage from 09 to 15, according to the BBCH scale for cereals, rice or maize, with the proviso that the herbicide composition comprising at least metamitron is applied in a lower stage in the BBCH scale than the additional herbicide is applied

The oxyacetamide herbicide may be selected from the group consisting of flufenacetat, flufenacet oxalate, and mefenacet. The method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides selected from the group consisting of flufenacetat, flufenacet oxalate, and mefenacet; 3-isoxazolidinones, thiocarbamates, dinitroanilines, phenyl ether inhibitors of PDS, urea inhibitors of photosynthesis at PS II or cinmethylin in a stage from 09 to 15, according to the BBCH scale for cereals, rice or maize, with the proviso that the herbicide composition comprising at least metamitron is applied in a lower stage in the BBCH scale than the additional herbicide is applied.

The 3-isoxazolidinone herbicide may be selected from the group consisting of bixlozone and clomazone. The method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones selected from the group consisting of bixlozone and clomazone; thiocarbamates, dinitroanilines, phenyl ether inhibitors of PDS, urea inhibitors of photosynthesis at PS II or cinmethylin in a stage from 09 to 15, according to the BBCH scale for cereals, rice or maize, with the proviso that the herbicide composition comprising at least metamitron is applied in a lower stage in the BBCH scale than the additional herbicide is applied.

The thiocarbamate herbicide may be selected from the group consisting of triallate and prosulfocarb. The method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates selected from the group consisting of triallate and prosulfocarb; dinitroanilines, phenyl ether inhibitors of PDS, urea inhibitors of photosynthesis at PS II or cinmethylin in a stage from 09 to 15, according to the BBCH scale for cereals, rice or maize, with the proviso that the herbicide composition comprising at least metamitron is applied in a lower stage in the BBCH scale than the additional herbicide is applied.

The dinitroaniline herbicide may be selected from the group consisting of pendimethalin and butralin. The method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines selected from the group consisting of pendimethalin and butralin; phenyl ether inhibitors of PDS, urea inhibitors of photosynthesis at PS II or cinmethylin in a stage from 09 to 15, according to the BBCH scale for cereals, rice or maize, with the proviso that the herbicide composition comprising at least metamitron is applied in a lower stage in the BBCH scale than the additional herbicide is applied.

The phenyl ether inhibitor of PDS may be selected from the group consisting of diflufenican, picolinafen and beflubutamid. The method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines, phenyl ether inhibitors of PDS selected from the group consisting of diflufenican, picolinafen and beflubutamid; urea inhibitors of photosynthesis at PS II or cinmethylin in a stage from 09 to 15, according to the BBCH scale for cereals, rice or maize, with the proviso that the herbicide composition comprising at least metamitron is applied in a lower stage in the BBCH scale than the additional herbicide is applied.

The urea inhibitor of photosynthesis at PS II may be selected from the group consisting of chlorotoluron or diuron. The method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines, phenyl ether inhibitors of PDS, urea inhibitors of photosynthesis at PS II selected from the group consisting of chlorotoluron or diuron; or cinmethylin in a stage from 09 to 15, according to the BBCH scale for cereals, rice or maize, with the proviso that the herbicide composition comprising at least metamitron is applied in a lower stage in the BBCH scale than the additional herbicide is applied.

The method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides selected from the group consisting of flufenacetat, flufenacet oxalate, and mefenacet; 3-isoxazolidinones selected from the group consisting of bixlozone and clomazone; thiocarbamates selected from the group consisting of triallate and prosulfocarb; dinitroanilines selected from the group consisting of pendimethalin and butralin; phenyl ether inhibitors of PDS selected from the group consisting of diflufenican, picolinafen and beflubutamid; urea inhibitors of photosynthesis at PS II selected from the group consisting of chlorotoluron or diuron; or cinmethylin in a stage from 09 to 15, according to the BBCH scale for cereals, rice or maize, with the proviso that the herbicide composition comprising at least metamitron is applied in a lower stage in the BBCH scale than the additional herbicide is applied. The method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be selected from the groups consisting of an oxyacetamide which may be flufenacetat, a 3-isoxazolidinone which may be bixlozone; thiocarbamates selected from the group consisting of triallate and prosulfocarb; a dinitroaniline which may be pendimethalin; phenyl ether inhibitors of PDS selected from the group consisting of diflufenican and picolinafen; urea inhibitors of photosynthesis at PS II selected from the group consisting of chlorotoluron or diuron; or cinmethylin in a stage from 09 to 15, according to the BBCH scale for cereals, rice or maize, with the proviso that the herbicide composition comprising at least metamitron is applied in a lower stage in the BBCH scale than the additional herbicide is applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be selected from the groups consisting of an oxyacetamide which may be flufenacetat, a 3-isoxazolidinone which may be bixlozone; thiocarbamates selected from the group consisting of triallate and prosulfocarb; a dinitroaniline which may be pendimethalin; a phenyl ether inhibitor of PDS which may be diflufenican; urea inhibitors of photosynthesis at PS II selected from the group consisting of chlorotoluron or diuron; or cinmethylin in a stage from 09 to 15, according to the BBCH scale for cereals, rice or maize, with the proviso that the herbicide composition comprising at least metamitron is applied in a lower stage in the BBCH scale than the additional herbicide is applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus, of an effective amount of at least one additional herbicide which may be flufenacet in a stage from 09 to 15, according to the BBCH scale for cereals, rice or maize, with the proviso that the herbicide composition comprising at least metamitron is applied in a lower stage in the BBCH scale than flufenacet is applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be bixlozone in a stage from 09 to 15, according to the BBCH scale for cereals, rice or maize, with the proviso that the herbicide composition comprising at least metamitron is applied in a lower stage in the BBCH scale than bixlozone is applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be triallate in a stage from 09 to 15, according to the BBCH scale for cereals, rice or maize, with the proviso that the herbicide composition comprising at least metamitron is applied in a lower stage in the BBCH scale than triallate is applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be prosulfocarb in a stage from 09 to 15, according to the BBCH scale for cereals, rice or maize, with the proviso that the herbicide composition comprising at least metamitron is applied in a lower stage in the BBCH scale than prosulfocarb is applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be pendimethalin in a stage from 09 to 15, according to the BBCH scale for cereals, rice or maize, with the proviso that the herbicide composition comprising at least metamitron is applied in a lower stage in the BBCH scale than pendimethalin is applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be diflufenican in a stage from 09 to 15, according to the BBCH scale for cereals, rice or maize, with the proviso that the herbicide composition comprising at least metamitron is applied in a lower stage in the BBCH scale than diflufenican is applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be chlorotoluron in a stage from 09 to 15, according to the BBCH scale for cereals, rice or maize, with the proviso that the herbicide composition comprising at least metamitron is applied in a lower stage in the BBCH scale than chlorotoluron is applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be diuron in a stage from 09 to 15, according to the BBCH scale for cereals, rice or maize, with the proviso that the herbicide composition comprising at least metamitron is applied in a lower stage in the BBCH scale than diuron is applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide which may be cinmethylin in a stage from 09 to 15, according to the BBCH scale for cereals, rice or maize, with the proviso that the herbicide composition comprising at least metamitron is applied in a lower stage in the BBCH scale than cinmethylin is applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be flufenacet and cinmethylin in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be flufenacet and diflufenican in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be flufenacet and prosulfocarb in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be flufenacet and bixlozone in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be flufenacet and pendimethalin in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be flufenacet and triallate in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be flufenacet and chlorotoluron in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be flufenacet and diuron in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be cinmethylin and diflufenican in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be cinmethylin and prosulfocarb in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be cinmethylin and bixlozone in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be cinmethylin and pendimethalin in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be cinmethylin and triallate in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be cinmethylin and chlorotoluron in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be cinmethylin and diuron in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be diflufenican and prosulfocarb in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be diflufenican and bixlozone in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be diflufenican and pendimethalin in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be diflufenican and triallate in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be diflufenican and chlorotoluron in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be diflufenican and diuron in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be prosulfocarb and bixlozone in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be prosulfocarb and pendimethalin in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be prosulfocarb and triallate in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be prosulfocarb and chlorotoluron in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron in a stage from 00 to 12, according to the BBCH scale for cereals, rice or maize, to a locus where the weed is to be controlled, and the application to the locus of an effective amount of additional herbicides which may be prosulfocarb and diuron in a stage from 09 to 15, according to the BBCH scale for cereals, rice or maize, with the proviso that the herbicide composition comprising at least metamitron is applied in a lower stage in the BBCH scale than the additional herbicides are applied.

The total amount of metamitron in the method of the present disclosure may be such that it provides metamitron, to the applied field, in a dosage range of about 200 g/ha to about 3000 g/ha, in a dosage range of about 400 g/ha to about 2000 g/ha, in a dosage range of about 500 g/ha to about 1400 g/ha

The total amount of oxyacetamide herbicide in the method of the present disclosure may be such that it provides the oxyacetamide herbicide, to the applied field, in a dosage range of about 10 g/ha to about 500 g/ha, in a dosage range of about 25 g/ha to about 400 g/ha, in a dosage range of about 50 g/ha to about 300 g/ha.

The total amount of 3-isoxazolidinone herbicide in the method of the present disclosure may be such that it provides the 3-isoxazolidinone herbicide, to the applied field, in a dosage range of about 50 g/ha to about 750 g/ha, in a dosage range of about 100 g/ha to about 600 g/ha, in a dosage range of about 200 g/ha to about 500 g/ha.

The total amount of thiocarbamate herbicide in the method of the present disclosure may be such that it provides the thiocarbamate herbicide, to the applied field, in a dosage range of about 500 g/ha to about 5000 g/ha, in a dosage range of about 750 g/ha to about 4500 g/ha, in a dosage range of about 1000 g/ha to about 4000 g/ha.

The total amount of dinitroaniline herbicide in the method of the present disclosure may be such that it provides the dinitroaniline herbicide, to the applied field, in a dosage range of about 1000 g/ha to about 2500 g/ha, in a dosage range of about 750 g/ha to about 2000 g/ha, in a dosage range of about 500 g/ha to about 1600 g/ha.

The total amount of phenyl ether inhibitor of PDS in the method of the present disclosure may be such that it provides the phenyl ether inhibitor of PDS, to the applied field, in a dosage range of about 10 g/ha to about 400 g/ha, in a dosage range of about 20 g/ha to about 250 g/ha, in a dosage range of about 50 g/ha to about 150 g/ha.

The total amount of urea inhibitor of photosynthesis at PS II in the method of the present disclosure may be such that it provides the urea inhibitor of photosynthesis at PS II, to the applied field, in a dosage range of about 50 g/ha to about 2000 g/ha, in a dosage range of about 100 g/ha to about 1800 g/ha, in a dosage range of about 150 g/ha to about 1500 g/ha.

The total amount of cinmethylin herbicide in the method of the present disclosure may be such that it provides cinmethylin, to the applied field, in a dosage range of about 100 g/ha to about 750 g/ha, in a dosage range of about 150 g/ha to about 500 g/ha, in a dosage range of about 250 g/ha to about 375 g/ha.

The present disclosure relates to a method for controlling weeds, which comprises the application of an effective amount of a herbicide composition comprising at least metamitron such that it provides metamitron, to the applied field, in a dosage range of about 200 g/ha to about 3000 g/ha, in a stage from 00 to 12, according to the BBCH scale for cereals, rice or maize, to a locus where the weed is to be controlled, and the application to the locus of an effective amount of at least one additional herbicide in a stage from 09 to 15, according to the BBCH scale for cereals, rice or maize, with the proviso that the herbicide composition comprising at least metamitron is applied in a lower stage in the BBCH scale than the additional herbicide is applied.

The present disclosure relates to a method for controlling weeds, which comprises the application of an effective amount of a herbicide composition comprising at least metamitron such that it provides metamitron, to the applied field, in a dosage range of about 200 g/ha to about 3000 g/ha, in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines, phenyl ether inhibitors of PDS, urea inhibitors of photosynthesis at PS II or cinmethylin such that it provides the oxyacetamide herbicide, to the applied field, in a dosage range of about 10 g/ha to about 500 g/ha, the 3-isoxazolidinone herbicide, to the applied field, in a dosage range of about 50 g/ha to about 750 g/ha, the thiocarbamate herbicide, to the applied field, in a dosage range of about 500 g/ha to about 5000 g/ha, the dinitroaniline herbicide, to the applied field, in a dosage range of about 1000 g/ha to about 2500 g/ha, the phenyl ether inhibitor of PDS, to the applied field, in a dosage range of about 10 g/ha to about 400 g/ha, the urea inhibitor of photosynthesis at PS II, to the applied field, in a dosage range of about 50 g/ha to about 2000 g/ha, or cinmethylin, to the applied field, in a dosage range of about 100 g/ha to about 750 g/ha, in a stage from 09 to 15, according to the BBCH scale for cereals, rice or maize, with the proviso that the herbicide composition comprising at least metamitron is applied in a lower stage in the BBCH scale than the additional herbicide is applied.

The present disclosure relates to a method for controlling weeds, which comprises the application of an effective amount of a herbicide composition comprising at least metamitron such that it provides metamitron, to the applied field, in a dosage range of about 400 g/ha to about 2000 g/ha, in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines, phenyl ether inhibitors of PDS, urea inhibitors of photosynthesis at PS II or cinmethylin such that it provides the oxyacetamide herbicide, to the applied field, in a dosage range of about 25 g/ha to about 400 g/ha, the 3-isoxazolidinone herbicide, to the applied field, in a dosage range of about 100 g/ha to about 600 g/ha, the thiocarbamate herbicide, to the applied field, in a dosage range of about 750 g/ha to about 4500 g/ha, the dinitroaniline herbicide, to the applied field, in a dosage range of about 750 g/ha to about 2000 g/ha, the phenyl ether inhibitor of PDS, to the applied field, in a dosage range of about 20 g/ha to about 250 g/ha, the urea inhibitor of photosynthesis at PS II, to the applied field, in a dosage range of about 100 g/ha to about 1800 g/ha, or cinmethylin, to the applied field, in a dosage range of about 150 g/ha to about 500 g/ha, in a stage from 09 to 15, according to the BBCH scale for cereals, rice or maize, with the proviso that the herbicide composition comprising at least metamitron is applied in a lower stage in the BBCH scale than the additional herbicide is applied.

The present disclosure relates to a method for controlling weeds, which comprises the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines, phenyl ether inhibitors of PDS, urea inhibitors of photosynthesis at PS II or cinmethylin such that it provides the oxyacetamide herbicide, to the applied field, in a dosage range of about 50 g/ha to about 300 g/ha, the 3-isoxazolidinone herbicide, to the applied field, in a dosage range of about 200 g/ha to about 500 g/ha, the thiocarbamate herbicide, to the applied field, in a dosage range of about 1000 g/ha to about 4000 g/ha, the dinitroaniline herbicide, to the applied field, in a dosage range of about 500 g/ha to about 1600 g/ha, the phenyl ether inhibitor of PDS, to the applied field, in a dosage range of about 50 g/ha to about 150 g/ha, the urea inhibitor of photosynthesis at PS II, to the applied field, in a dosage range of about 150 g/ha to about 1500 g/ha, or cinmethylin, to the applied field, in a dosage range of about 250 g/ha to about 375 g/ha, in a stage from 09 to 15, according to the BBCH scale for cereals, rice or maize, with the proviso that the herbicide composition comprising at least metamitron is applied in a lower stage in the BBCH scale than the additional herbicide is applied.

The method for controlling weeds, may comprise the application of an effective amount of a herbicide composition comprising at least metamitron such that it provides metamitron, to the applied field, in a dosage range of about 200 g/ha to about 3000 g/ha, in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides selected from the group consisting of flufenacetat, flufenacet oxalate, and mefenacet; 3-isoxazolidinones, thiocarbamates, dinitroanilines, phenyl ether inhibitors of PDS, urea inhibitors of photosynthesis at PS II or cinmethylin such that it provides the oxyacetamide herbicide, to the applied field, in a dosage range of about 10 g/ha to about 500 g/ha, the 3-isoxazolidinone herbicide, to the applied field, in a dosage range of about 50 g/ha to about 750 g/ha, the thiocarbamate herbicide, to the applied field, in a dosage range of about 500 g/ha to about 5000 g/ha, the dinitroaniline herbicide, to the applied field, in a dosage range of about 1000 g/ha to about 2500 g/ha, the phenyl ether inhibitor of PDS, to the applied field, in a dosage range of about 10 g/ha to about 400 g/ha, the urea inhibitor of photosynthesis at PS II, to the applied field, in a dosage range of about 50 g/ha to about 2000 g/ha, or cinmethylin, to the applied field, in a dosage range of about 100 g/ha to about 750 g/ha, in a stage from 09 to 15, according to the BBCH scale for cereals, rice or maize, with the proviso that the herbicide composition comprising at least metamitron is applied in a lower stage in the BBCH scale than the additional herbicide is applied.

The method for controlling weeds, may comprise the application of an effective amount of a herbicide composition comprising at least metamitron such that it provides metamitron, to the applied field, in a dosage range of about 200 g/ha to about 3000 g/ha, in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones selected from the group consisting of bixlozone and clomazone; thiocarbamates, dinitroanilines, phenyl ether inhibitors of PDS, urea inhibitors of photosynthesis at PS II or cinmethylin such that it provides the oxyacetamide herbicide, to the applied field, in a dosage range of about 10 g/ha to about 500 g/ha, the 3-isoxazolidinone herbicide, to the applied field, in a dosage range of about 50 g/ha to about 750 g/ha, the thiocarbamate herbicide, to the applied field, in a dosage range of about 500 g/ha to about 5000 g/ha, the dinitroaniline herbicide, to the applied field, in a dosage range of about 1000 g/ha to about 2500 g/ha, the phenyl ether inhibitor of PDS, to the applied field, in a dosage range of about 10 g/ha to about 400 g/ha, the urea inhibitor of photosynthesis at PS II, to the applied field, in a dosage range of about 50 g/ha to about 2000 g/ha, or cinmethylin, to the applied field, in a dosage range of about 100 g/ha to about 750 g/ha, in a stage from 09 to 15, according to the BBCH scale for cereals, rice or maize, with the proviso that the herbicide composition comprising at least metamitron is applied in a lower stage in the BBCH scale than the additional herbicide is applied.

The method for controlling weeds, may comprise the application of an effective amount of a herbicide composition comprising at least metamitron such that it provides metamitron, to the applied field, in a dosage range of about 200 g/ha to about 3000 g/ha, in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates selected from the group consisting of triallate and prosulfocarb; dinitroanilines, phenyl ether inhibitors of PDS, urea inhibitors of photosynthesis at PS II or cinmethylin such that it provides the oxyacetamide herbicide, to the applied field, in a dosage range of about 10 g/ha to about 500 g/ha, the 3-isoxazolidinone herbicide, to the applied field, in a dosage range of about 50 g/ha to about 750 g/ha, the thiocarbamate herbicide, to the applied field, in a dosage range of about 500 g/ha to about 5000 g/ha, the dinitroaniline herbicide, to the applied field, in a dosage range of about 1000 g/ha to about 2500 g/ha, the phenyl ether inhibitor of PDS, to the applied field, in a dosage range of about 10 g/ha to about 400 g/ha, the urea inhibitor of photosynthesis at PS II, to the applied field, in a dosage range of about 50 g/ha to about 2000 g/ha, or cinmethylin, to the applied field, in a dosage range of about 100 g/ha to about 750 g/ha, in a stage from 09 to 15, according to the BBCH scale for cereals, rice or maize, with the proviso that the herbicide composition comprising at least metamitron is applied in a lower stage in the BBCH scale than the additional herbicide is applied.

The method for controlling weeds, may comprise the application of an effective amount of a herbicide composition comprising at least metamitron such that it provides metamitron, to the applied field, in a dosage range of about 200 g/ha to about 3000 g/ha, in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines selected from the group consisting of pendimethalin and butralin; phenyl ether inhibitors of PDS, urea inhibitors of photosynthesis at PS II or cinmethylin such that it provides the oxyacetamide herbicide, to the applied field, in a dosage range of about 10 g/ha to about 500 g/ha, the 3-isoxazolidinone herbicide, to the applied field, in a dosage range of about 50 g/ha to about 750 g/ha, the thiocarbamate herbicide, to the applied field, in a dosage range of about 500 g/ha to about 5000 g/ha, the dinitroaniline herbicide, to the applied field, in a dosage range of about 1000 g/ha to about 2500 g/ha, the phenyl ether inhibitor of PDS, to the applied field, in a dosage range of about 10 g/ha to about 400 g/ha, the urea inhibitor of photosynthesis at PS II, to the applied field, in a dosage range of about 50 g/ha to about 2000 g/ha, or cinmethylin, to the applied field, in a dosage range of about 100 g/ha to about 750 g/ha, in a stage from 09 to 15, according to the BBCH scale for cereals, rice or maize, with the proviso that the herbicide composition comprising at least metamitron is applied in a lower stage in the BBCH scale than the additional herbicide is applied.

The method for controlling weeds, may comprise the application of an effective amount of a herbicide composition comprising at least metamitron such that it provides metamitron, to the applied field, in a dosage range of about 200 g/ha to about 3000 g/ha, in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines, phenyl ether inhibitors of PDS selected from the group consisting of diflufenican, picolinafen and beflubutamid; urea inhibitors of photosynthesis at PS II or cinmethylin such that it provides the oxyacetamide herbicide, to the applied field, in a dosage range of about 10 g/ha to about 500 g/ha, the 3-isoxazolidinone herbicide, to the applied field, in a dosage range of about 50 g/ha to about 750 g/ha, the thiocarbamate herbicide, to the applied field, in a dosage range of about 500 g/ha to about 5000 g/ha, the dinitroaniline herbicide, to the applied field, in a dosage range of about 1000 g/ha to about 2500 g/ha, the phenyl ether inhibitor of PDS, to the applied field, in a dosage range of about 10 g/ha to about 400 g/ha, the urea inhibitor of photosynthesis at PS II, to the applied field, in a dosage range of about 50 g/ha to about 2000 g/ha, or cinmethylin, to the applied field, in a dosage range of about 100 g/ha to about 750 g/ha, in a stage from 09 to 15, according to the BBCH scale for cereals, rice or maize, with the proviso that the herbicide composition comprising at least metamitron is applied in a lower stage in the BBCH scale than the additional herbicide is applied.

The method for controlling weeds, may comprise the application of an effective amount of a herbicide composition comprising at least metamitron such that it provides metamitron, to the applied field, in a dosage range of about 200 g/ha to about 3000 g/ha, in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines, phenyl ether inhibitors of PDS, urea inhibitors of photosynthesis at PS II selected from the group consisting of chlorotoluron or diuron; or cinmethylin such that it provides the oxyacetamide herbicide, to the applied field, in a dosage range of about 10 g/ha to about 500 g/ha, the 3-isoxazolidinone herbicide, to the applied field, in a dosage range of about 50 g/ha to about 750 g/ha, the thiocarbamate herbicide, to the applied field, in a dosage range of about 500 g/ha to about 5000 g/ha, the dinitroaniline herbicide, to the applied field, in a dosage range of about 1000 g/ha to about 2500 g/ha, the phenyl ether inhibitor of PDS, to the applied field, in a dosage range of about 10 g/ha to about 400 g/ha, the urea inhibitor of photosynthesis at PS II, to the applied field, in a dosage range of about 50 g/ha to about 2000 g/ha, or cinmethylin, to the applied field, in a dosage range of about 100 g/ha to about 750 g/ha, in a stage from 09 to 15, according to the BBCH scale for cereals, rice or maize, with the proviso that the herbicide composition comprising at least metamitron is applied in a lower stage in the BBCH scale than the additional herbicide is applied.

The method for controlling weeds, may comprise the application of an effective amount of a herbicide composition comprising at least metamitron such that it provides metamitron, to the applied field, in a dosage range of about 400 g/ha to about 2000 g/ha, in a stage from 00 to 12, according to the BBCH scale for cereals, rice or maize, to a locus where the weed is to be controlled, and the application to the locus of an effective amount of at least one additional herbicide which may be selected from the groups consisting of oxyacetamides selected from the group consisting of flufenacetat, flufenacet oxalate, and mefenacet; 3-isoxazolidinones selected from the group consisting of bixlozone and clomazone; thiocarbamates selected from the group consisting of triallate and prosulfocarb; dinitroanilines selected from the group consisting of pendimethalin and butralin; phenyl ether inhibitors of PDS selected from the group consisting of diflufenican, picolinafen and beflubutamid; urea inhibitors of photosynthesis at PS II selected from the group consisting of chlorotoluron or diuron; or cinmethylin such that it provides the oxyacetamide herbicide, to the applied field, in a dosage range of about 25 g/ha to about 400 g/ha, the 3-isoxazolidinone herbicide, to the applied field, in a dosage range of about 100 g/ha to about 600 g/ha, the thiocarbamate herbicide, to the applied field, in a dosage range of about 750 g/ha to about 4500 g/ha, the dinitroaniline herbicide, to the applied field, in a dosage range of about 750 g/ha to about 2000 g/ha, the phenyl ether inhibitor of PDS, to the applied field, in a dosage range of about 20 g/ha to about 250 g/ha, the urea inhibitor of photosynthesis at PS II, to the applied field, in a dosage range of about 100 g/ha to about 1800 g/ha, or cinmethylin, to the applied field, in a dosage range of about 150 g/ha to about 500 g/ha, in a stage from 09 to 15, according to the BBCH scale for cereals, rice or maize, with the proviso that the herbicide composition comprising at least metamitron is applied in a lower stage in the BBCH scale than the additional herbicide is applied. The method for controlling weeds, may comprise the application of an effective amount of a herbicide composition comprising at least metamitron such that it provides metamitron, to the applied field, in a dosage range of about 400 g/ha to about 2000 g/ha, in a stage from 00 to 12, according to the BBCH scale for cereals, rice or maize, to a locus where the weed is to be controlled, and the application to the locus of an effective amount of at least one additional herbicide which may be selected from the groups consisting of an oxyacetamide which may be flufenacetat, a 3-isoxazolidinone which may be bixlozone; thiocarbamates selected from the group consisting of triallate and prosulfocarb; a dinitroaniline which may be pendimethalin; phenyl ether inhibitors of PDS selected from the group consisting of diflufenican and picolinafen; urea inhibitors of photosynthesis at PS II selected from the group consisting of chlorotoluron or diuron; or cinmethylin such that it provides the oxyacetamide herbicide, to the applied field, in a dosage range of about 25 g/ha to about 400 g/ha, the 3-isoxazolidinone herbicide, to the applied field, in a dosage range of about 100 g/ha to about 600 g/ha, the thiocarbamate herbicide, to the applied field, in a dosage range of about 750 g/ha to about 4500 g/ha, the dinitroaniline herbicide, to the applied field, in a dosage range of about 750 g/ha to about 2000 g/ha, the phenyl ether inhibitor of PDS, to the applied field, in a dosage range of about 20 g/ha to about 250 g/ha, the urea inhibitor of photosynthesis at PS II, to the applied field, in a dosage range of about 100 g/ha to about 1800 g/ha, or cinmethylin, to the applied field, in a dosage range of about 150 g/ha to about 500 g/ha, in a stage from 09 to 15, according to the BBCH scale for cereals, rice or maize, with the proviso that the herbicide composition comprising at least metamitron is applied in a lower stage in the BBCH scale than the additional herbicide is applied.

In an embodiment, the method for controlling weeds, may comprise the application of an effective amount of a herbicide composition comprising at least metamitron such that it provides metamitron, to the applied field, in a dosage range of about 400 g/ha to about 2000 g/ha, in a stage from 00 to 12, according to the BBCH scale for cereals, rice or maize, to a locus where the weed is to be controlled, and the application to the locus of an effective amount of at least one additional herbicide which may be selected from the groups consisting of an oxyacetamide which may be flufenacetat, a 3-isoxazolidinone which may be bixlozone; thiocarbamates selected from the group consisting of triallate and prosulfocarb; a dinitroaniline which may be pendimethalin; a phenyl ether inhibitor of PDS which may be diflufenican; urea inhibitors of photosynthesis at PS II selected from the group consisting of chlorotoluron or diuron; or cinmethylin such that it provides the oxyacetamide herbicide, to the applied field, in a dosage range of about 25 g/ha to about 400 g/ha, the 3-isoxazolidinone herbicide, to the applied field, in a dosage range of about 100 g/ha to about 600 g/ha, the thiocarbamate herbicide, to the applied field, in a dosage range of about 750 g/ha to about 4500 g/ha, the dinitroaniline herbicide, to the applied field, in a dosage range of about 750 g/ha to about 2000 g/ha, the phenyl ether inhibitor of PDS, to the applied field, in a dosage range of about 20 g/ha to about 250 g/ha, the urea inhibitor of photosynthesis at PS II, to the applied field, in a dosage range of about 100 g/ha to about 1800 g/ha, or cinmethylin, to the applied field, in a dosage range of about 150 g/ha to about 500 g/ha, in a stage from 09 to 15, according to the BBCH scale for cereals, rice or maize, with the proviso that the herbicide composition comprising at least metamitron is applied in a lower stage in the BBCH scale than the additional herbicide is applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of at least one additional herbicide which may be flufenacet, such that it provides flufenacet, to the applied field, in a dosage range of about 50 g/ha to about 300 g/ha in a stage from 09 to 15, according to the BBCH scale for cereals, rice or maize, with the proviso that the herbicide composition comprising at least metamitron is applied in a lower stage in the BBCH scale than flufenacet is applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of at least one additional herbicide which may be bixlozone, such that it provides bixlozone, to the applied field, in a dosage range of about 200 g/ha to about 500 g/ha in a stage from 09 to 15, according to the BBCH scale for cereals, rice or maize, with the proviso that the herbicide composition comprising at least metamitron is applied in a lower stage in the BBCH scale than bixlozone is applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application of an effective amount of at least one additional herbicide to the locus which may be triallate, such that it provides triallate, to the applied field, in a dosage range of about 1000 g/ha to about 2250 g/ha in a stage from 09 to 15, according to the BBCH scale for cereals, rice or maize, with the proviso that the herbicide composition comprising at least metamitron is applied in a lower stage in the BBCH scale than triallate is applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of at least one additional herbicide which may be prosulfocarb, such that it provides prosulfocarb, to the applied field, in a dosage range of about 1600 g/ha to about 4000 g/ha in a stage from 09 to 15, according to the BBCH scale for cereals, rice or maize, with the proviso that the herbicide composition comprising at least metamitron is applied in a lower stage in the BBCH scale than prosulfocarb is applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of at least one additional herbicide which may be pendimethalin, such that it provides pendimethalin, to the applied field, in a dosage range of about 500 g/ha to about 1600 g/ha in a stage from 09 to 15, according to the BBCH scale for cereals, rice or maize, with the proviso that the herbicide composition comprising at least metamitron is applied in a lower stage in the BBCH scale than pendimethalin is applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of at least one additional herbicide which may be diflufenican, such that it provides diflufenican, to the applied field, in a dosage range of about 50 g/ha to about 150 g/ha in a stage from 09 to 15, according to the BBCH scale for cereals, rice or maize, with the proviso that the herbicide composition comprising at least metamitron is applied in a lower stage in the BBCH scale than diflufenican is applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of at least one additional herbicide which may be chlorotoluron, such that it provides chlorotoluron, to the applied field, in a dosage range of about 150 g/ha to about 1500 g/ha in a stage from 09 to 15, according to the BBCH scale for cereals, rice or maize, with the proviso that the herbicide composition comprising at least metamitron is applied in a lower stage in the BBCH scale than chlorotoluron is applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of at least one additional herbicide which may be diuron, such that it provides diuron, to the applied field, in a dosage range of about 150 g/ha to about 1500 g/ha in a stage from 09 to 15, according to the BBCH scale for cereals, rice or maize, with the proviso that the herbicide composition comprising at least metamitron is applied in a lower stage in the BBCH scale than diuron is applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of at least one additional herbicide which may be cinmethylin, such that it provides cinmethylin, to the applied field, in a dosage range of about 250 g/ha to about 375 g/ha in a stage from 09 to 15, according to the BBCH scale for cereals, rice or maize, with the proviso that the herbicide composition comprising at least metamitron is applied in a lower stage in the BBCH scale than cinmethylin is applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be flufenacet and cinmethylin, such that it provides flufenacet, to the applied field, in a dosage range of about 50 g/ha to about 300 g/ha, and cinmethylin, to the applied field, in a dosage range of about 250 g/ha to about 375 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be flufenacet and diflufenican, such that it provides flufenacet, to the applied field, in a dosage range of about 50 g/ha to about 300 g/ha, and diflufenican, to the applied field, in a dosage range of about 50 g/ha to about 150 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be flufenacet and prosulfocarb, such that it provides flufenacet, to the applied field, in a dosage range of about 50 g/ha to about 300 g/ha, and prosulfocarb, to the applied field, in a dosage range of about 1600 g/ha to about 4000 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be flufenacet and bixlozone, such that it provides flufenacet, to the applied field, in a dosage range of about 50 g/ha to about 300 g/ha, and bixlozone, to the applied field, in a dosage range of about 200 g/ha to about 500 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be flufenacet and pendimethalin, such that it provides flufenacet, to the applied field, in a dosage range of about 50 g/ha to about 300 g/ha, and pendimethalin, to the applied field, in a dosage range of about 500 g/ha to about 1600 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be flufenacet and triallate, such that it provides flufenacet, to the applied field, in a dosage range of about 50 g/ha to about 300 g/ha, and triallate, to the applied field, in a dosage range of about 1000 g/ha to about 2250 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be flufenacet and chlorotoluron, such that it provides flufenacet, to the applied field, in a dosage range of about 50 g/ha to about 300 g/ha, and chlorotoluron, to the applied field, in a dosage range of about 150 g/ha to about 1500 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be flufenacet and diuron, such that it provides flufenacet, to the applied field, in a dosage range of about 50 g/ha to about 300 g/ha, and diuron, to the applied field, in a dosage range of about 150 g/ha to about 1500 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be cinmethylin and diflufenican, such that it provides cinmethylin, to the applied field, in a dosage range of about 250 g/ha to about 375 g/ha, and diflufenican, to the applied field, in a dosage range of about 50 g/ha to about 150 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be cinmethylin and prosulfocarb, such that it provides cinmethylin, to the applied field, in a dosage range of about 250 g/ha to about 375 g/ha, and prosulfocarb, to the applied field, in a dosage range of about 1600 g/ha to about 4000 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be cinmethylin and bixlozone, such that it provides cinmethylin, to the applied field, in a dosage range of about 250 g/ha to about 375 g/ha, and bixlozone, to the applied field, in a dosage range of about 200 g/ha to about 500 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be cinmethylin and pendimethalin, such that it provides cinmethylin, to the applied field, in a dosage range of about 250 g/ha to about 375 g/ha, and pendimethalin, to the applied field, in a dosage range of about 500 g/ha to about 1600 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be cinmethylin and triallate, such that it provides cinmethylin, to the applied field, in a dosage range of about 250 g/ha to about 375 g/ha, and triallate, to the applied field, in a dosage range of about 1000 g/ha to about 2250 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be cinmethylin and chlorotoluron, such that it provides cinmethylin, to the applied field, in a dosage range of about 250 g/ha to about 375 g/ha, and chlorotoluron, to the applied field, in a dosage range of about 150 g/ha to about 1500 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be cinmethylin and diuron, such that it provides cinmethylin, to the applied field, in a dosage range of about 250 g/ha to about 375 g/ha, and diuron, to the applied field, in a dosage range of about 150 g/ha to about 1500 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be diflufenican and prosulfocarb, such that it provides diflufenican, to the applied field, in a dosage range of about 50 g/ha to about 150 g/ha, and prosulfocarb, to the applied field, in a dosage range of about 1600 g/ha to about 4000 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be diflufenican and bixlozone, such that it provides diflufenican, to the applied field, in a dosage range of about 50 g/ha to about 150 g/ha, and bixlozone, to the applied field, in a dosage range of about 200 g/ha to about 500 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be diflufenican and pendimethalin, such that it provides diflufenican, to the applied field, in a dosage range of about 50 g/ha to about 150 g/ha, and pendimethalin, to the applied field, in a dosage range of about 500 g/ha to about 1600 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be diflufenican and triallate, such that it provides diflufenican, to the applied field, in a dosage range of about 50 g/ha to about 150 g/ha, and triallate, to the applied field, in a dosage range of about 1000 g/ha to about 2250 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be diflufenican and chlorotoluron, such that it provides diflufenican, to the applied field, in a dosage range of about 50 g/ha to about 150 g/ha, and chlorotoluron, to the applied field, in a dosage range of about 150 g/ha to about 1500 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be diflufenican and diuron, such that it provides diflufenican, to the applied field, in a dosage range of about 50 g/ha to about 150 g/ha, and diuron, to the applied field, in a dosage range of about 150 g/ha to about 1500 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be prosulfocarb and bixlozone, such that it provides prosulfocarb, to the applied field, in a dosage range of about 1600 g/ha to about 4000 g/ha, and bixlozone, to the applied field, in a dosage range of about 200 g/ha to about 500 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be prosulfocarb and pendimethalin, such that it provides prosulfocarb, to the applied field, in a dosage range of about 1600 g/ha to about 4000 g/ha, and pendimethalin, to the applied field, in a dosage range of about 500 g/ha to about 1600 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be prosulfocarb and triallate, such that it provides prosulfocarb, to the applied field, in a dosage range of about 1600 g/ha to about 4000 g/ha, and triallate, to the applied field, in a dosage range of about 1000 g/ha to about 2250 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be prosulfocarb and chlorotoluron, such that it provides prosulfocarb, to the applied field, in a dosage range of about 1600 g/ha to about 4000 g/ha, and chlorotoluron, to the applied field, in a dosage range of about 150 g/ha to about 1500 g/ha in a stage from 09 to 15, according to the BBCH scale for cereals, rice or maize, with the proviso that the herbicide composition comprising at least metamitron is applied in a lower stage in the BBCH scale than the additional herbicides are applied.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 12, according to the BBCH scale for cereals, rice or maize, to a locus where the weed is to be controlled, and the application to the locus of an effective amount of additional herbicides which may be prosulfocarb and diuron, such that it provides prosulfocarb, to the applied field, in a dosage range of about 1600 g/ha to about 4000 g/ha, and diuron, to the applied field, in a dosage range of about 150 g/ha to about 1500 g/ha in a stage from 09 to 15, according to the BBCH scale for cereals, rice or maize, with the proviso that the herbicide composition comprising at least metamitron is applied in a lower stage in the BBCH scale than the additional herbicides are applied.

The method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide in a stage from 09 to 15, according to the BBCH scale for cereals, rice or maize.

The method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines, phenyl ether inhibitors of PDS, urea inhibitors of photosynthesis at PS II or cinmethylin in a stage from 09 to 15, according to the BBCH scale for cereals, rice or maize.

The method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides selected from the group consisting of flufenacetat, flufenacet oxalate, and mefenacet; 3-isoxazolidinones, thiocarbamates, dinitroanilines, phenyl ether inhibitors of PDS, urea inhibitors of photosynthesis at PS II or cinmethylin in a stage from 09 to 15, according to the BBCH scale for cereals, rice or maize.

The method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones selected from the group consisting of bixlozone and clomazone; thiocarbamates, dinitroanilines, phenyl ether inhibitors of PDS, urea inhibitors of photosynthesis at PS II or cinmethylin in a stage from 09 to 15, according to the BBCH scale for cereals, rice or maize.

The method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates selected from the group consisting of triallate and prosulfocarb; dinitroanilines, phenyl ether inhibitors of PDS, urea inhibitors of photosynthesis at PS II or cinmethylin in a stage from 09 to 15, according to the BBCH scale for cereals, rice or maize.

The method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines selected from the group consisting of pendimethalin and butralin; phenyl ether inhibitors of PDS, urea inhibitors of photosynthesis at PS II or cinmethylin in a stage from 09 to 15, according to the BBCH scale for cereals, rice or maize.

The method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines, phenyl ether inhibitors of PDS selected from the group consisting of diflufenican, picolinafen and beflubutamid; urea inhibitors of photosynthesis at PS II or cinmethylin in a stage from 09 to 15, according to the BBCH scale for cereals, rice or maize.

The method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines, phenyl ether inhibitors of PDS, urea inhibitors of photosynthesis at PS II selected from the group consisting of chlorotoluron or diuron; or cinmethylin in a stage from 09 to 15, according to the BBCH scale for cereals, rice or maize.

The method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides selected from the group consisting of flufenacetat, flufenacet oxalate, and mefenacet; 3-isoxazolidinones selected from the group consisting of bixlozone and clomazone; thiocarbamates selected from the group consisting of triallate and prosulfocarb; dinitroanilines selected from the group consisting of pendimethalin and butralin; phenyl ether inhibitors of PDS selected from the group consisting of diflufenican, picolinafen and beflubutamid; urea inhibitors of photosynthesis at PS II selected from the group consisting of chlorotoluron or diuron; or cinmethylin in a stage from 09 to 15, according to the BBCH scale for cereals, rice or maize. The method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be selected from the groups consisting of an oxyacetamide which may be flufenacetat, a 3-isoxazolidinone which may be bixlozone; thiocarbamates selected from the group consisting of triallate and prosulfocarb; a dinitroaniline which may be pendimethalin; phenyl ether inhibitors of PDS selected from the group consisting of diflufenican and picolinafen; urea inhibitors of photosynthesis at PS II selected from the group consisting of chlorotoluron or diuron; or cinmethylin in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be selected from the groups consisting of an oxyacetamide which may be flufenacetat, a 3-isoxazolidinone which may be bixlozone; thiocarbamates selected from the group consisting of triallate and prosulfocarb; a dinitroaniline which may be pendimethalin; a phenyl ether inhibitor of PDS which may be diflufenican; urea inhibitors of photosynthesis at PS II selected from the group consisting of chlorotoluron or diuron; or cinmethylin in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be flufenacet in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be bixlozone in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be triallate in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be prosulfocarb in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be pendimethalin in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be diflufenican in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be chlorotoluron in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be diuron in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of at least one additional herbicide which may be cinmethylin in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be flufenacet and cinmethylin in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be flufenacet and diflufenican in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be flufenacet and prosulfocarb in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be flufenacet and bixlozone in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be flufenacet and pendimethalin in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be flufenacet and triallate in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be flufenacet and chlorotoluron in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be flufenacet and diuron in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be cinmethylin and diflufenican in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be cinmethylin and prosulfocarb in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be cinmethylin and bixlozone in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be cinmethylin and pendimethalin in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be cinmethylin and triallate in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be cinmethylin and chlorotoluron in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be cinmethylin and diuron in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be diflufenican and prosulfocarb in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be diflufenican and bixlozone in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be diflufenican and pendimethalin in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be diflufenican and triallate in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be diflufenican and chlorotoluron in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be diflufenican and diuron in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be prosulfocarb and bixlozone in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be prosulfocarb and pendimethalin in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be prosulfocarb and triallate in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be prosulfocarb and chlorotoluron in a stage from 09 to 15, according to the BBCH scale for cereals, rice or maize.

In an embodiment, the method for controlling weeds, may comprise the application of an effective amount of a herbicide composition comprising at least metamitron in a stage from 00 to 07, according to the BBCH scale for cereals, rice or maize, to a locus where the weed is to be controlled, and the application to the locus of an effective amount of additional herbicides which may be prosulfocarb and diuron in a stage from 09 to 15, according to the BBCH scale for cereals, rice or maize.

The present disclosure relates to a method for controlling weeds, which comprises the application of an effective amount of a herbicide composition comprising at least metamitron such that it provides metamitron, to the applied field, in a dosage range of about 200 g/ha to about 3000 g/ha, in a stage from 00 to 07, according to the BBCH scale for cereals, rice or maize, to a locus where the weed is to be controlled, and the application to the locus of an effective amount of at least one additional herbicide in a stage from 09 to 15, according to the BBCH scale for cereals, rice or maize.

The present disclosure relates to a method for controlling weeds, which comprises the application of an effective amount of a herbicide composition comprising at least metamitron such that it provides metamitron, to the applied field, in a dosage range of about 200 g/ha to about 3000 g/ha, in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines, phenyl ether inhibitors of PDS, urea inhibitors of photosynthesis at PS II or cinmethylin such that it provides the oxyacetamide herbicide, to the applied field, in a dosage range of about 10 g/ha to about 500 g/ha, the 3-isoxazolidinone herbicide, to the applied field, in a dosage range of about 50 g/ha to about 750 g/ha, the thiocarbamate herbicide, to the applied field, in a dosage range of about 500 g/ha to about 5000 g/ha, the dinitroaniline herbicide, to the applied field, in a dosage range of about 1000 g/ha to about 2500 g/ha, the phenyl ether inhibitor of PDS, to the applied field, in a dosage range of about 10 g/ha to about 400 g/ha, the urea inhibitor of photosynthesis at PS II, to the applied field, in a dosage range of about 50 g/ha to about 2000 g/ha, or cinmethylin, to the applied field, in a dosage range of about 100 g/ha to about 750 g/ha, in a stage from 09 to 15, according to the BBCH scale for cereals, rice or maize.

The present disclosure relates to a method for controlling weeds, which comprises the application of an effective amount of a herbicide composition comprising at least metamitron such that it provides metamitron, to the applied field, in a dosage range of about 400 g/ha to about 2000 g/ha, in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines, phenyl ether inhibitors of PDS, urea inhibitors of photosynthesis at PS II or cinmethylin such that it provides the oxyacetamide herbicide, to the applied field, in a dosage range of about 25 g/ha to about 400 g/ha, the 3-isoxazolidinone herbicide, to the applied field, in a dosage range of about 100 g/ha to about 600 g/ha, the thiocarbamate herbicide, to the applied field, in a dosage range of about 750 g/ha to about 4500 g/ha, the dinitroaniline herbicide, to the applied field, in a dosage range of about 750 g/ha to about 2000 g/ha, the phenyl ether inhibitor of PDS, to the applied field, in a dosage range of about 20 g/ha to about 250 g/ha, the urea inhibitor of photosynthesis at PS II, to the applied field, in a dosage range of about 100 g/ha to about 1800 g/ha, or cinmethylin, to the applied field, in a dosage range of about 150 g/ha to about 500 g/ha, in a stage from 09 to 15, according to the BBCH scale for cereals, rice or maize.

The present disclosure relates to a method for controlling weeds, which comprises the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines, phenyl ether inhibitors of PDS, urea inhibitors of photosynthesis at PS II or cinmethylin such that it provides the oxyacetamide herbicide, to the applied field, in a dosage range of about 50 g/ha to about 300 g/ha, the 3-isoxazolidinone herbicide, to the applied field, in a dosage range of about 200 g/ha to about 500 g/ha, the thiocarbamate herbicide, to the applied field, in a dosage range of about 1000 g/ha to about 4000 g/ha, the dinitroaniline herbicide, to the applied field, in a dosage range of about 500 g/ha to about 1600 g/ha, the phenyl ether inhibitor of PDS, to the applied field, in a dosage range of about 50 g/ha to about 150 g/ha, the urea inhibitor of photosynthesis at PS II, to the applied field, in a dosage range of about 150 g/ha to about 1500 g/ha, or cinmethylin, to the applied field, in a dosage range of about 250 g/ha to about 375 g/ha, in a stage from 09 to 15, according to the BBCH scale for cereals, rice or maize.

The method for controlling weeds, may comprise the application of an effective amount of a herbicide composition comprising at least metamitron such that it provides metamitron, to the applied field, in a dosage range of about 200 g/ha to about 3000 g/ha, in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides selected from the group consisting of flufenacetat, flufenacet oxalate, and mefenacet; 3-isoxazolidinones, thiocarbamates, dinitroanilines, phenyl ether inhibitors of PDS, urea inhibitors of photosynthesis at PS II or cinmethylin such that it provides the oxyacetamide herbicide, to the applied field, in a dosage range of about 10 g/ha to about 500 g/ha, the 3-isoxazolidinone herbicide, to the applied field, in a dosage range of about 50 g/ha to about 750 g/ha, the thiocarbamate herbicide, to the applied field, in a dosage range of about 500 g/ha to about 5000 g/ha, the dinitroaniline herbicide, to the applied field, in a dosage range of about 1000 g/ha to about 2500 g/ha, the phenyl ether inhibitor of PDS, to the applied field, in a dosage range of about 10 g/ha to about 400 g/ha, the urea inhibitor of photosynthesis at PS II, to the applied field, in a dosage range of about 50 g/ha to about 2000 g/ha, or cinmethylin, to the applied field, in a dosage range of about 100 g/ha to about 750 g/ha, in a stage from 09 to 15, according to the BBCH scale for cereals, rice or maize.

The method for controlling weeds, may comprise the application of an effective amount of a herbicide composition comprising at least metamitron such that it provides metamitron, to the applied field, in a dosage range of about 200 g/ha to about 3000 g/ha, in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones selected from the group consisting of bixlozone and clomazone; thiocarbamates, dinitroanilines, phenyl ether inhibitors of PDS, urea inhibitors of photosynthesis at PS II or cinmethylin such that it provides the oxyacetamide herbicide, to the applied field, in a dosage range of about 10 g/ha to about 500 g/ha, the 3-isoxazolidinone herbicide, to the applied field, in a dosage range of about 50 g/ha to about 750 g/ha, the thiocarbamate herbicide, to the applied field, in a dosage range of about 500 g/ha to about 5000 g/ha, the dinitroaniline herbicide, to the applied field, in a dosage range of about 1000 g/ha to about 2500 g/ha, the phenyl ether inhibitor of PDS, to the applied field, in a dosage range of about 10 g/ha to about 400 g/ha, the urea inhibitor of photosynthesis at PS II, to the applied field, in a dosage range of about 50 g/ha to about 2000 g/ha, or cinmethylin, to the applied field, in a dosage range of about 100 g/ha to about 750 g/ha, in a stage from 09 to 15, according to the BBCH scale for cereals, rice or maize.

The method for controlling weeds, may comprise the application of an effective amount of a herbicide composition comprising at least metamitron such that it provides metamitron, to the applied field, in a dosage range of about 200 g/ha to about 3000 g/ha, in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates selected from the group consisting of triallate and prosulfocarb; dinitroanilines, phenyl ether inhibitors of PDS, urea inhibitors of photosynthesis at PS II or cinmethylin such that it provides the oxyacetamide herbicide, to the applied field, in a dosage range of about 10 g/ha to about 500 g/ha, the 3-isoxazolidinone herbicide, to the applied field, in a dosage range of about 50 g/ha to about 750 g/ha, the thiocarbamate herbicide, to the applied field, in a dosage range of about 500 g/ha to about 5000 g/ha, the dinitroaniline herbicide, to the applied field, in a dosage range of about 1000 g/ha to about 2500 g/ha, the phenyl ether inhibitor of PDS, to the applied field, in a dosage range of about 10 g/ha to about 400 g/ha, the urea inhibitor of photosynthesis at PS II, to the applied field, in a dosage range of about 50 g/ha to about 2000 g/ha, or cinmethylin, to the applied field, in a dosage range of about 100 g/ha to about 750 g/ha, in a stage from 09 to 15, according to the BBCH scale for cereals, rice or maize.

The method for controlling weeds, may comprise the application of an effective amount of a herbicide composition comprising at least metamitron such that it provides metamitron, to the applied field, in a dosage range of about 200 g/ha to about 3000 g/ha, in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines selected from the group consisting of pendimethalin and butralin; phenyl ether inhibitors of PDS, urea inhibitors of photosynthesis at PS II or cinmethylin such that it provides the oxyacetamide herbicide, to the applied field, in a dosage range of about 10 g/ha to about 500 g/ha, the 3-isoxazolidinone herbicide, to the applied field, in a dosage range of about 50 g/ha to about 750 g/ha, the thiocarbamate herbicide, to the applied field, in a dosage range of about 500 g/ha to about 5000 g/ha, the dinitroaniline herbicide, to the applied field, in a dosage range of about 1000 g/ha to about 2500 g/ha, the phenyl ether inhibitor of PDS, to the applied field, in a dosage range of about 10 g/ha to about 400 g/ha, the urea inhibitor of photosynthesis at PS II, to the applied field, in a dosage range of about 50 g/ha to about 2000 g/ha, or cinmethylin, to the applied field, in a dosage range of about 100 g/ha to about 750 g/ha, in a stage from 09 to 15, according to the BBCH scale for cereals, rice or maize.

The method for controlling weeds, may comprise the application of an effective amount of a herbicide composition comprising at least metamitron such that it provides metamitron, to the applied field, in a dosage range of about 200 g/ha to about 3000 g/ha, in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines, phenyl ether inhibitors of PDS selected from the group consisting of diflufenican, picolinafen and beflubutamid; urea inhibitors of photosynthesis at PS II or cinmethylin such that it provides the oxyacetamide herbicide, to the applied field, in a dosage range of about 10 g/ha to about 500 g/ha, the 3-isoxazolidinone herbicide, to the applied field, in a dosage range of about 50 g/ha to about 750 g/ha, the thiocarbamate herbicide, to the applied field, in a dosage range of about 500 g/ha to about 5000 g/ha, the dinitroaniline herbicide, to the applied field, in a dosage range of about 1000 g/ha to about 2500 g/ha, the phenyl ether inhibitor of PDS, to the applied field, in a dosage range of about 10 g/ha to about 400 g/ha, the urea inhibitor of photosynthesis at PS II, to the applied field, in a dosage range of about 50 g/ha to about 2000 g/ha, or cinmethylin, to the applied field, in a dosage range of about 100 g/ha to about 750 g/ha, in a stage from 09 to 15, according to the BBCH scale for cereals, rice or maize.

The method for controlling weeds, may comprise the application of an effective amount of a herbicide composition comprising at least metamitron such that it provides metamitron, to the applied field, in a dosage range of about 200 g/ha to about 3000 g/ha, in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides, 3-isoxazolidinones, thiocarbamates, dinitroanilines, phenyl ether inhibitors of PDS, urea inhibitors of photosynthesis at PS II selected from the group consisting of chlorotoluron or diuron; or cinmethylin such that it provides the oxyacetamide herbicide, to the applied field, in a dosage range of about 10 g/ha to about 500 g/ha, the 3-isoxazolidinone herbicide, to the applied field, in a dosage range of about 50 g/ha to about 750 g/ha, the thiocarbamate herbicide, to the applied field, in a dosage range of about 500 g/ha to about 5000 g/ha, the dinitroaniline herbicide, to the applied field, in a dosage range of about 1000 g/ha to about 2500 g/ha, the phenyl ether inhibitor of PDS, to the applied field, in a dosage range of about 10 g/ha to about 400 g/ha, the urea inhibitor of photosynthesis at PS II, to the applied field, in a dosage range of about 50 g/ha to about 2000 g/ha, or cinmethylin, to the applied field, in a dosage range of about 100 g/ha to about 750 g/ha, in a stage from 09 to 15, according to the BBCH scale for cereals, rice or maize.

The method for controlling weeds, may comprise the application of an effective amount of a herbicide composition comprising at least metamitron such that it provides metamitron, to the applied field, in a dosage range of about 400 g/ha to about 2000 g/ha, in a stage from 00 to 07, according to the BBCH scale for cereals, rice or maize, to a locus where the weed is to be controlled, and the application to the locus of an effective amount of at least one additional herbicide which may be selected from the groups consisting of oxyacetamides selected from the group consisting of flufenacetat, flufenacet oxalate, and mefenacet; 3-isoxazolidinones selected from the group consisting of bixlozone and clomazone; thiocarbamates selected from the group consisting of triallate and prosulfocarb; dinitroanilines selected from the group consisting of pendimethalin and butralin; phenyl ether inhibitors of PDS selected from the group consisting of diflufenican, picolinafen and beflubutamid; urea inhibitors of photosynthesis at PS II selected from the group consisting of chlorotoluron or diuron; or cinmethylin such that it provides the oxyacetamide herbicide, to the applied field, in a dosage range of about 25 g/ha to about 400 g/ha, the 3-isoxazolidinone herbicide, to the applied field, in a dosage range of about 100 g/ha to about 600 g/ha, the thiocarbamate herbicide, to the applied field, in a dosage range of about 750 g/ha to about 4500 g/ha, the dinitroaniline herbicide, to the applied field, in a dosage range of about 750 g/ha to about 2000 g/ha, the phenyl ether inhibitor of PDS, to the applied field, in a dosage range of about 20 g/ha to about 250 g/ha, the urea inhibitor of photosynthesis at PS II, to the applied field, in a dosage range of about 100 g/ha to about 1800 g/ha, or cinmethylin, to the applied field, in a dosage range of about 150 g/ha to about 500 g/ha, in a stage from 09 to 15, according to the BBCH scale for cereals, rice or maize. The method for controlling weeds, may comprise the application of an effective amount of a herbicide composition comprising at least metamitron such that it provides metamitron, to the applied field, in a dosage range of about 400 g/ha to about 2000 g/ha, in a stage from 00 to 07, according to the BBCH scale for cereals, rice or maize, to a locus where the weed is to be controlled, and the application to the locus of an effective amount of at least one additional herbicide which may be selected from the groups consisting of an oxyacetamide which may be flufenacetat, a 3-isoxazolidinone which may be bixlozone; thiocarbamates selected from the group consisting of triallate and prosulfocarb; a dinitroaniline which may be pendimethalin; phenyl ether inhibitors of PDS selected from the group consisting of diflufenican and picolinafen; urea inhibitors of photosynthesis at PS II selected from the group consisting of chlorotoluron or diuron; or cinmethylin such that it provides the oxyacetamide herbicide, to the applied field, in a dosage range of about 25 g/ha to about 400 g/ha, the 3-isoxazolidinone herbicide, to the applied field, in a dosage range of about 100 g/ha to about 600 g/ha, the thiocarbamate herbicide, to the applied field, in a dosage range of about 750 g/ha to about 4500 g/ha, the dinitroaniline herbicide, to the applied field, in a dosage range of about 750 g/ha to about 2000 g/ha, the phenyl ether inhibitor of PDS, to the applied field, in a dosage range of about 20 g/ha to about 250 g/ha, the urea inhibitor of photosynthesis at PS II, to the applied field, in a dosage range of about 100 g/ha to about 1800 g/ha, or cinmethylin, to the applied field, in a dosage range of about 150 g/ha to about 500 g/ha, in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 400 g/ha to about 2000 g/ha, in a stage from 00 to 07, according to the BBCH scale for cereals, rice or maize, to a locus where the weed is to be controlled, and the application to the locus of an effective amount of at least one additional herbicide which may be selected from the groups consisting of an oxyacetamide which may be flufenacetat, a 3-isoxazolidinone which may be bixlozone; thiocarbamates selected from the group consisting of triallate and prosulfocarb; a dinitroaniline which may be pendimethalin; a phenyl ether inhibitor of PDS which may be diflufenican; urea inhibitors of photosynthesis at PS II selected from the group consisting of chlorotoluron or diuron; or cinmethylin such that it provides the oxyacetamide herbicide, to the applied field, in a dosage range of about 25 g/ha to about 400 g/ha, the 3-isoxazolidinone herbicide, to the applied field, in a dosage range of about 100 g/ha to about 600 g/ha, the thiocarbamate herbicide, to the applied field, in a dosage range of about 750 g/ha to about 4500 g/ha, the dinitroaniline herbicide, to the applied field, in a dosage range of about 750 g/ha to about 2000 g/ha, the phenyl ether inhibitor of PDS, to the applied field, in a dosage range of about 20 g/ha to about 250 g/ha, the urea inhibitor of photosynthesis at PS II, to the applied field, in a dosage range of about 100 g/ha to about 1800 g/ha, or cinmethylin, to the applied field, in a dosage range of about 150 g/ha to about 500 g/ha, in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of at least one additional herbicide which may be flufenacet, such that it provides flufenacet, to the applied field, in a dosage range of about 50 g/ha to about 300 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of at least one additional herbicide which may be bixlozone, such that it provides bixlozone, to the applied field, in a dosage range of about 200 g/ha to about 500 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of at least one additional herbicide which may be triallate, such that it provides triallate, to the applied field, in a dosage range of about 1000 g/ha to about 2250 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of at least one additional herbicide which may be prosulfocarb, such that it provides prosulfocarb, to the applied field, in a dosage range of about 1600 g/ha to about 4000 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of at least one additional herbicide which may be pendimethalin, such that it provides pendimethalin, to the applied field, in a dosage range of about 500 g/ha to about 1600 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of at least one additional herbicide which may be diflufenican, such that it provides diflufenican, to the applied field, in a dosage range of about 50 g/ha to about 150 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of at least one additional herbicide which may be chlorotoluron, such that it provides chlorotoluron, to the applied field, in a dosage range of about 150 g/ha to about 1500 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of at least one additional herbicide which may be diuron, such that it provides diuron, to the applied field, in a dosage range of about 150 g/ha to about 1500 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of at least one additional herbicide which may be cinmethylin, such that it provides cinmethylin, to the applied field, in a dosage range of about 250 g/ha to about 375 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be flufenacet and cinmethylin, such that it provides flufenacet, to the applied field, in a dosage range of about 50 g/ha to about 300 g/ha, and cinmethylin, to the applied field, in a dosage range of about 250 g/ha to about 375 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be flufenacet and diflufenican, such that it provides flufenacet, to the applied field, in a dosage range of about 50 g/ha to about 300 g/ha, and diflufenican, to the applied field, in a dosage range of about 50 g/ha to about 150 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be flufenacet and prosulfocarb, such that it provides flufenacet, to the applied field, in a dosage range of about 50 g/ha to about 300 g/ha, and prosulfocarb, to the applied field, in a dosage range of about 1600 g/ha to about 4000 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be flufenacet and bixlozone, such that it provides flufenacet, to the applied field, in a dosage range of about 50 g/ha to about 300 g/ha, and bixlozone, to the applied field, in a dosage range of about 200 g/ha to about 500 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be flufenacet and pendimethalin, such that it provides flufenacet, to the applied field, in a dosage range of about 50 g/ha to about 300 g/ha, and pendimethalin, to the applied field, in a dosage range of about 500 g/ha to about 1600 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be flufenacet and triallate, such that it provides flufenacet, to the applied field, in a dosage range of about 50 g/ha to about 300 g/ha, and triallate, to the applied field, in a dosage range of about 1000 g/ha to about 2250 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be flufenacet and chlorotoluron, such that it provides flufenacet, to the applied field, in a dosage range of about 50 g/ha to about 300 g/ha, and chlorotoluron, to the applied field, in a dosage range of about 150 g/ha to about 1500 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be flufenacet and diuron, such that it provides flufenacet, to the applied field, in a dosage range of about 50 g/ha to about 300 g/ha, and diuron, to the applied field, in a dosage range of about 150 g/ha to about 1500 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be cinmethylin and diflufenican, such that it provides cinmethylin, to the applied field, in a dosage range of about 250 g/ha to about 375 g/ha, and diflufenican, to the applied field, in a dosage range of about 50 g/ha to about 150 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be cinmethylin and prosulfocarb, such that it provides cinmethylin, to the applied field, in a dosage range of about 250 g/ha to about 375 g/ha, and prosulfocarb, to the applied field, in a dosage range of about 1600 g/ha to about 4000 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be cinmethylin and bixlozone, such that it provides cinmethylin, to the applied field, in a dosage range of about 250 g/ha to about 375 g/ha, and bixlozone, to the applied field, in a dosage range of about 200 g/ha to about 500 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be cinmethylin and pendimethalin, such that it provides cinmethylin, to the applied field, in a dosage range of about 250 g/ha to about 375 g/ha, and pendimethalin, to the applied field, in a dosage range of about 500 g/ha to about 1600 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be cinmethylin and triallate, such that it provides cinmethylin, to the applied field, in a dosage range of about 250 g/ha to about 375 g/ha, and triallate, to the applied field, in a dosage range of about 1000 g/ha to about 2250 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be cinmethylin and chlorotoluron, such that it provides cinmethylin, to the applied field, in a dosage range of about 250 g/ha to about 375 g/ha, and chlorotoluron, to the applied field, in a dosage range of about 150 g/ha to about 1500 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be cinmethylin and diuron, such that it provides cinmethylin, to the applied field, in a dosage range of about 250 g/ha to about 375 g/ha, and diuron, to the applied field, in a dosage range of about 150 g/ha to about 1500 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be diflufenican and prosulfocarb, such that it provides diflufenican, to the applied field, in a dosage range of about 50 g/ha to about 150 g/ha, and prosulfocarb, to the applied field, in a dosage range of about 1600 g/ha to about 4000 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be diflufenican and bixlozone, such that it provides diflufenican, to the applied field, in a dosage range of about 50 g/ha to about 150 g/ha, and bixlozone, to the applied field, in a dosage range of about 200 g/ha to about 500 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be diflufenican and pendimethalin, such that it provides diflufenican, to the applied field, in a dosage range of about 50 g/ha to about 150 g/ha, and pendimethalin, to the applied field, in a dosage range of about 500 g/ha to about 1600 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be diflufenican and triallate, such that it provides diflufenican, to the applied field, in a dosage range of about 50 g/ha to about 150 g/ha, and triallate, to the applied field, in a dosage range of about 1000 g/ha to about 2250 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be diflufenican and chlorotoluron, such that it provides diflufenican, to the applied field, in a dosage range of about 50 g/ha to about 150 g/ha, and chlorotoluron, to the applied field, in a dosage range of about 150 g/ha to about 1500 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be diflufenican and diuron, such that it provides diflufenican, to the applied field, in a dosage range of about 50 g/ha to about 150 g/ha, and diuron, to the applied field, in a dosage range of about 150 g/ha to about 1500 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be prosulfocarb and bixlozone, such that it provides prosulfocarb, to the applied field, in a dosage range of about 1600 g/ha to about 4000 g/ha, and bixlozone, to the applied field, in a dosage range of about 200 g/ha to about 500 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be prosulfocarb and pendimethalin, such that it provides prosulfocarb, to the applied field, in a dosage range of about 1600 g/ha to about 4000 g/ha, and pendimethalin, to the applied field, in a dosage range of about 500 g/ha to about 1600 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be prosulfocarb and triallate, such that it provides prosulfocarb, to the applied field, in a dosage range of about 1600 g/ha to about 4000 g/ha, and triallate, to the applied field, in a dosage range of about 1000 g/ha to about 2250 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be prosulfocarb and chlorotoluron, such that it provides prosulfocarb, to the applied field, in a dosage range of about 1600 g/ha to about 4000 g/ha, and chlorotoluron, to the applied field, in a dosage range of about 150 g/ha to about 1500 g/ha in a stage from 09 to 15, according to the BBCH scale for cereals, rice or maize.

In an embodiment, the method for controlling weeds, may comprise the application of an effective amount of a herbicide composition comprising at least metamitron such that it provides metamitron, to the applied field, in a dosage range of about 500 g/ha to about 1400 g/ha, in a stage from 00 to 07, according to the BBCH scale for cereals, rice or maize, to a locus where the weed is to be controlled, and the application to the locus of an effective amount of additional herbicides which may be prosulfocarb and diuron, such that it provides prosulfocarb, to the applied field, in a dosage range of about 1600 g/ha to about 4000 g/ha, and diuron, to the applied field, in a dosage range of about 150 g/ha to about 1500 g/ha in a stage from 09 to 15, according to the BBCH scale for cereals, rice or maize.

The herbicide composition comprising at least metamitron may be any conventional composition, like for example, wettable powders (WP), emulsion concentrates (EC), microemulsion concentrates (MEC), water-soluble powders (SP), water-soluble concentrates (SL), suspoemulsion (SE), oil dispersions (OD), concentrated emulsions (BW) such as oil-in-water and water-in-oil emulsions, sprayable solutions or emulsions, capsule suspensions (CS), suspension concentrates (SC), dusts (DP), oil-miscible solutions (OL), seed-dressing products, granules (GR) in the form of microgranules, spray granules, coated granules and absorption granules, granules for soil application or broadcasting, water-soluble granules (SG), water-dispersible granules (WDG), ULV formulations, microcapsules (ZC) or waxes. These individual formulation types are known in the art.

The at least one additional herbicide may be also applied in any conventional composition, like the hereinabove disclosed compositions.

The herbicide composition comprising at least metamitron and the composition of the at least one additional herbicide may optionally contain one or more agriculturally acceptable inert additives, adjuvants and/or a further active ingredient, and they may also be provided as a premix or tank mixes, with the proviso that the optionally further active ingredient is different from metamitron or the at least one additional herbicide.

Among the further active ingredients, these herbicidal compositions may optionally comprise an effective amount of at least one herbicide selected from, but not limited to, herbicides belonging to classes such as lipid synthesis inhibitors, ALS inhibitors, photosynthesis PS II inhibitors, PS I electron diversion, protoporphyrinogen oxidase inhibitors, pigment synthesis inhibitors, PDS inhibitors, 4-HPPD inhibitors, DOXP synthase inhibitors, EPSP synthase inhibitors, glutamine synthetase inhibitors, DHP inhibitors, microtubule assembly inhibitors, microtubule organization inhibitors, cell division inhibitors, cellulose synthesis inhibitors, synthetic auxins, auxin transport inhibitors, as well as herbicides with unknown modes of action.

## Claims

1. A method for controlling weeds, which comprises the application of an effective amount of a herbicide composition comprising at least metamitron in a stage from 00 to 12, according to the BBCH scale for cereals, rice or maize, to a locus where the weed is to be controlled, and the application to the locus of an effective amount of at least one additional herbicide in a stage from 09 to 15, according to the BBCH scale for cereals, rice or maize, with the proviso that the herbicide composition comprising at least metamitron is applied in a lower stage in the BBCH scale than the additional herbicide is applied.

2. The method according to claim 1, wherein the additional herbicide is selected from the groups consisting of oxyacetamides, 3-isoxazolidinones, thiocarbamates, dinitroanilines, phenyl ether inhibitors of PDS, urea inhibitors of photosynthesis at PS II or cinmethylin.

3. The method according to claim 2, wherein the oxyacetamide is selected from the group consisting of flufenacetat, flufenacet oxalate, and mefenacet.

4. The method according to any of claims 2 to 3, wherein the 3-isoxazolidinone is selected from the group consisting of bixlozone and clomazone.

5. The method according to any of claims 2 to 4, wherein the thiocarbamate is selected from the group consisting of triallate and prosulfocarb.

6. The method according to any of claims 2 to 5, wherein the dinitroaniline is selected from the group consisting of pendimethalin and butralin.

7. The method according to any of claims 2 to 6, wherein the phenyl ether inhibitor of PDS is selected from the group consisting of diflufenican, picolinafen and beflubutamid.

8. The method according to any of claims 2 to 7, wherein the urea inhibitor of photosynthesis at PS II is selected from the group consisting of chlorotoluron or diuron.

9. The method according to any of any of previous claims, wherein metamitron is applied in a field, in a dosage range of about 200 g/ha to about 3000 g/ha.

10. The method according to any of claims 2 to 9, wherein the oxyacetamide herbicide, is applied in a field, in a dosage range of about 10 g/ha to about 500 g/ha, the 3-isoxazolidinone herbicide, is applied in a field, in a dosage range of about 50 g/ha to about 750 g/ha, the thiocarbamate herbicide, is applied in a field, in a dosage range of about 500 g/ha to about 5000 g/ha, the dinitroaniline herbicide, is applied in a field, in a dosage range of about 1000 g/ha to about 2500 g/ha, the phenyl ether inhibitor of PDS, is applied in a field, in a dosage range of about 10 g/ha to about 400 g/ha, the urea inhibitor of photosynthesis at PS II, is applied in a field, in a dosage range of about 50 g/ha to about 2000 g/ha, or cinmethylin, is applied in a field, in a dosage range of about 100 g/ha to about 750 g/ha.

11. The method according to any of any of previous claims, wherein the application of an effective amount of a herbicide composition comprising at least metamitron is in a stage from 00 to 07, according to the BBCH scale for cereals, rice or maize.

12. The method according to any of previous claims, wherein the plant is a cereal plant.

13. The method according to claim 12, wherein the cereal plant is selected from the group consisting of wheat, barley, maize, rice, oat, millet, rye, triticale, sorghum, fonio, teff and adlay.

14. The method according to any of previous claims, wherein the weed is selected from the group consisting of Alopecurus myosuroides Huds. (blackgrass, ALOMY), Apera spica venti (APESV), Poa annua (POAAN), Lolium species (LOLSS), Lolium multiflorum Lam. (Italian ryegrass, LOLMU) or Lolium perenne (English ryegrass, LOLPE).

15. The method according to any of previous claims, comprising a further active ingredient which is different from metamitron or the at least one additional herbicide.
